# EUROPÄISCHE PATENTSCHRIFT

(11) **EP 2 174 098 B1**
(45) Veröffentlichungstag und Bekanntmachung des Hinweises auf die Patenterteilung: **02.11.2016**
(21) Anmeldenummer: 08774489.2
(22) Anmeldetag: 27.06.2008
(51) Int. Cl.: G01D 7/02, B60K 35/00, B60K 37/02

(54) **KOMBINATIONSANZEIGEINSTRUMENT FÜR EIN KRAFTFAHRZEUG UND VERFAHREN ZUM STEUERN DESSELBEN**
COMBINATION DISPLAY INSTRUMENT FOR A MOTOR VEHICLE AND METHOD FOR CONTROLLING THE SAME
INSTRUMENT D'AFFICHAGE COMBINÉ POUR UN VÉHICULE AUTOMOBILE ET SON PROCÉDÉ DE COMMANDE

(30) Priorität: 23.07.2007 DE 102007034163
(43) Veröffentlichungstag der Anmeldung: 14.04.2010
(73) Patentinhaber: Volkswagen Aktiengesellschaft, 38440 Wolfsburg (DE)
(72) Erfinder: WENGELNIK, Heino, 38442 Wolfsburg (DE); WÄLLER, Christoph, 38102 Braunschweig (DE); THOM, Mathias, 38160 Braunschweig (DE); DEHMANN, Rainer, 10961 Berlin (DE)
(74) Vertreter: Reitstötter Kinzebach
(86) Internationale Anmeldenummer: PCT/EP2008/058331
(87) Internationale Veröffentlichungsnummer: WO 2009/013094

(56) Entgegenhaltungen:
- EP-A- 1 015 269
- EP-A- 1 342 605
- DE-A1- 4 321 146
- DE-A1- 10 303 278
- DE-A1-102004 038 916
- DE-A1-102005 058 976
- DE-A1-102005 058 976

## Beschreibung

Die vorliegende Erfindung betrifft ein Verfahren zum Steuern eines Displays eines Kombinationsanzeigeinstruments (im Folgenden auch Kombiinstrument genannt) für ein Kraftfahrzeug.

Kombiinstrumente von Kraftfahrzeugen weisen üblicherweise mehrere Bereiche auf, in denen verschiedene Informationen angezeigt werden. Diese Bereiche können analoge Zeigeranzeigeeinrichtungen, wie beispielsweise mechanische Rundinstrumente umfassen. Bei solchen Rundinstrumenten wird ein auf einer Welle angebrachter Zeiger mittels eines gesteuerten Zeigerantriebs zur analogen Darstellung einer Information, wie z.B. einer Geschwindigkeit, einer Drehzahl, einer Kühlwassertemperatur, einer Öltemperatur, eines Tankfüllstands oder dgl. relativ zu einem zugehörigen Zifferblatt bzw. einer Skaleneinrichtung angetrieben. Bei einem Rundinstrument ist die Skala auf zumindest einem Ringabschnitt vorgesehen. Zusätzlich zu den mechanischen Rundinstrumenten werden Displays verwendet, deren Informationsanzeige frei programmierbar ist und die daher sehr flexibel eingesetzt werden können. Als Displays werden z.B. Flüssigkristallanzeigen (LCDs), insbesondere Dünnschicht-(thin-film-transistor, TFT)-Displays eingesetzt.

In modernen Kraftfahrzeugen werden immer mehr Informationen und Funktionen auf der Anzeigeeinrichtung des Kombiinstruments dargestellt. Insbesondere Fahrerassistenzfunktionen kommt eine wachsende Bedeutung zu. Aus diesem Grund werden immer größere Displays in den Anzeigeeinrichtungen eingesetzt. Es sind beispielsweise Kombiinstrumente bekannt, bei denen die mechanischen Rundinstrumente vollständig von einem großen Display ersetzt wurden, welches die Rundinstrumente anzeigt. Nachteilhaft an derartigen Anzeigeeinrichtungen ist, dass sie aufgrund der Größe des Displays sehr teuer sind.

Aus der EP 1 015 269 B1 ist eine Anzeigevorrichtung eines Kombiinstruments bekannt, bei welcher ein Display bzw. eine elektrooptische Anzeigeeinrichtung zwischen zwei mechanischen Rundinstrumenten angeordnet ist. Eine ähnliche Anzeigeeinrichtung ist auch aus der EP 1 342 605 B1 bekannt.

Die DE 10 2005 058 976 A1 beschreibt eine Fahrzeug-Anzeigevorrichtung mit einem Display, auf welcher zwei Rundinstrumente angezeigt werden. Diese Rundinstrumente sind sehr eng nebeneinander angeordnet.

Bei der in der DE 10 2004 038916 A1 vorgeschlagenen Anzeigeeinrichtung für ein Kraftfahrzeug ist in Teilbereichen eines Displays eine passive Dekorschicht vorgesehen, die transparent wird, wenn an dieser Position Licht emittiert wird.

Es ist die Aufgabe der vorliegenden Erfindung ein Verfahren der eingangs genannten Art bereitzustellen, bei dem das Kombinationsanzeigeinstrument kostengünstig herstellbar ist und mit dem Informationen flexibel und einfach an verschiedene Bedürfnisse und Erfordernisse anpassbar angezeigt werden können. Ferner soll die Anzeigeeinrichtung kostengünstig an die Bedürfnisse verschiedener Fahrzeugmodelle anpassbar sein.

Diese Aufgabe wird erfindungsgemäß durch ein Verfahren mit den Merkmalen des Anspruchs 1 gelöst. Vorteilhafte Aus- und Weiterbildungen ergeben sich aus den Unteransprüchen.

Bei dem erfindungsgemäßen Verfahren wird zumindest in einem Betriebszustand das Display so angesteuert, dass zwei analoge Rundinstrumente nebeneinander so auf dem Display angezeigt werden, dass die Rundinstrumente jeweils eine Skala umfassen, die auf einem Teilkreis angeordnet ist, dass der aktuelle von dem Rundinstrument wiedergegebene Skalenwert mittels eines auf dem Display angezeigten Zeigers dargestellt wird, der radial von außen auf den Teilkreis zeigt, dass die Rundinstrumente so angeordnet sind, dass sie aneinander angrenzen, so dass zwischen den beiden Rundinstrumenten kein Anzeigebereich zur Darstellung von Information verbleibt und dass seitlich neben den Rundinstrumenten keine Anzeigebereiche gebildet sind, und dass innerhalb der Rundinstrumente jeweils Anzeigebereiche zur Darstellung von Informationen gebildet sind, so dass jegliche Zusatzinformation, welche den Anzeigeinhalt der Rundinstrumente ergänzt, innerhalb der Rundinstrumente dargestellt wird.

Durch die Steuerung des Displays mittels des erfindungsgemäßen Verfahrens kann das Kombiinstrument ohne bewegbare mechanische Teile auskommen. Die Informationsanzeige kann vollständig mittels des frei programmierbaren Displays erfolgen. Gleichzeitig wird das Display durch das erfindungsgemäße Verfahren so gesteuert, dass zumindest zwei analoge Rundinstrumente angezeigt werden, wobei jedoch die Größe des Displays dadurch verringert wird, dass zwischen den beiden Rundinstrumenten kein Anzeigebereich gebildet ist, innerhalb der Rundinstrumente hingegen zwei Anzeigebereiche gebildet werden.

Gemäß einer bevorzugten Weiterbildung des erfindungsgemäßen Verfahrens sind auch seitlich neben den beiden Rundinstrumenten keine Anzeigebereiche gebildet, wodurch die Größe des Displays weiter verringert wird, ohne die intuitive Erfassbarkeit der auf dem Display dargestellten Information zu beeinträchtigen. Schließlich können auch oberhalb und/oder unterhalb der Rundinstrumente keine Anzeigebereiche gebildet sein. In diesem Fall wird insbesondere jegliche Zusatzinformation, welche den Anzeigeinhalt der Rundinstrumente ergänzt, innerhalb der Rundinstrumente dargestellt.

Die Rundinstrumente umfassen jeweils eine Skala, die auf einem Teilkreis angeordnet ist. Dabei kann der aktuelle von dem Rundinstrument wiedergegebene Skalenwert mit einer farbigen Markierung der Skala angezeigt werden. Erfindungsgemäß wird der aktuelle von dem Rundinstrument wiedergegebene Skalenwert mittels eines auf dem Display angezeigten Zeigers dargestellt, der radial von außen auf den Teilkreis zeigt. Dadurch kann der Anzeigebereich innerhalb der Rundinstrumente frei für die Darstellung von Zusatzinformation verbleiben.

Bei einem Kombinationsanzeigeinstrument für das erfindungsgemäße Verfahren kann in zumindest einem Betriebszustand des Kombinationsanzeigeinstruments eine Steuereinheit das Display so ansteuern, dass zwei analoge Rundinstrumente nebeneinander so auf dem Display angezeigt werden, dass sie aneinander angrenzen, so dass zwischen den beiden Rundinstrumenten kein Anzeigebereich zur Darstellung von Information verbleibt, und innerhalb der Rundinstrumente jeweils Anzeigebereiche zur Darstellung von Information gebildet sind.

Vorteilhaft an einem solchen Kombinationsanzeigeinstrument ist, dass durch die Darstellung analoger Rundinstrumente eine gewohnte, intuitive und schnell erfassbare Informationsdarstellung für den Betrachter bereitgestellt wird, gleichzeitig durch die Verwendung des Displays das Kombinationsanzeigeinstrument flexibel an verschiedenartige Bedürfnisse für die Inforrnationsdarstellung anpassbar ist und ferner kostengünstig an verschiedene Fahrzeugmodelle angepasst werden kann.

Gemäß einer bevorzugten Ausgestaltung des Kombinationsanzeigeinstruments ist zumindest ein körperlicher Ringabschnitt vorgesehen, der aus der Betrachtungsrichtung auf das Display vor dem Display angeordnet ist und der einem auf dem Display darstellbaren Rundinstrument zugeordnet ist. Der Ringabschnitt kann insbesondere auf dem Display angeordnet sein. Ferner kann der Ringabschnitt gemäß einer weiteren Ausgestaltung auf oder in der transparenten Deckscheibe angeordnet sein, welche beabstandet zu dem Display angeordnet ist. Eine solche Deckscheibe schließt üblicherweise das Kombiinstrument eines Kraftfahrzeugs ab.

Unter einem körperlichen Ringabschnitt wird verstanden, dass der Ringabschnitt nicht vollständig mittels einer Anzeige auf dem Display realisiert wird. Der Ringabschnitt kann ein offener Ring sein, d.h. ein bestimmter Abschnitt des Rings ist ausgespart. Ferner kann der Ringabschnitt auch zu einem geschlossenen Ring geschlossen sein.

Der Ringabschnitt ist insbesondere teiltransparent und/oder teilverspiegelt. Bevorzugt umfasst der Ringabschnitt radial nebeneinander liegend einen nicht transparenten Ringabschnitt und einen transparenten Ringabschnitt. Dabei ist der transparente Ringabschnitt insbesondere radial innen liegend.

Gemäß einer bevorzugten Weiterbildung des Kombiinstruments weist der Ringabschnitt eine Skaleneinteilung für das zugeordnete Rundinstrument auf. Alternativ kann die Skaleneinteilung auch von dem Display wiedergegeben werden, und zwar bevorzugt hinter dem transparenten Teil des Ringabschnitts und/oder radial außen oder innen neben dem Ringabschnitt.

Gemäß einer bevorzugten Weiterbildung wird die Skaleneinteilung um Zahlenwerte ergänzt, die von dem Display neben der entsprechenden Skaleneinteilung angezeigt werden. Zusätzlich kann das Display eine digitale Anzeige des Anzeigewerts des zugeordneten Rundinstruments wiedergeben.

Gemäß einer bevorzugten Weiterbildung des Kombiinstruments ist mit dem Display ein Ringbalken zur Anzeige eines Anzeigewerts für das zugeordnete Rundinstrument hinter, d. h. in dem Bereich des Displays, der von dem körperlichen Ringabschnitt abgedeckt ist, oder neben dem teiftransparenten Ringabschnitt anzeigbar.

Gemäß einer bevorzugten Ausgestaltung des Kombinationsanzeigeinstruments ist das Verhältnis der Summe der Außendurchmesser der beiden Rundinstrumente zu der Breite des Displays in einem Bereich von 0,8 bis 0,98, bevorzugt von 0,9 bis 0,95 und besonders bevorzugt etwa 0,93. Der Außendurchmesser wird durch die äußersten radial gegenüberliegenden Punkte, welche der Darstellung des Rundinstruments dienen, definiert. Der Außendurchmesser wird insbesondere in einer horizontalen Ausrichtung, d. h. in Richtung der Breite des Displays gemessen.

Ferner ist das Verhältnis der Summe der Durchmesser der Anzeigebereiche innerhalb der beiden Rundinstrumente zu der Breite des Displays in einem Bereich von 0,5 bis 0,8, bevorzugt von 0,6 bis 0,7 und besonders bevorzugt bei etwa 0,63.

Die Erfindung wird nun an Hand eines Ausführungsbeispiels mit Bezug zu den Zeichnungen erläutert.
- Figur 1: zeigt eine Anzeige auf dem Display eines Kombinationsanzeigeinstruments gemäß einem Ausführungsbeispiel der Erfindung und
- Figur 2: zeigt ein Rundinstrument eines Kombinationsanzeigeinstruments.

Das Kombinationsanzeigeinstrument besitzt als zentrales Anzeigeelement ein Display 1 der Größe von etwa 8 Zoll mit einem Seitenverhältnis von 16:9 oder 4:3. Beispielsweise kann ein TFT-Display verwendet werden. In dem Standardbetriebszustand werden zwei analoge Rundinstrumente 2 und 3 angezeigt. Das linke Rundinstrument 2 dient der Anzeige einer Motordrehzahl, das rechte Rundinstrument 3 dient der Anzeige der Geschwindigkeit des Kraftfahrzeugs. Die Anzeige des linken Rundinstruments 2 umfasst einen durchgehenden Teilkreis, von dem radial nach außen Skalenstriche 6 weggehen. Radial außerhalb dieser Skala werden Zahlenwerte 10 in Abhängigkeit von der Funktion des Rundinstruments 2 angezeigt. Im vorliegenden Ausführungsbeispiel verdeutlichen die Zahlenangaben 10 die Motordrehzahl des Kraftfahrzeugs, wobei die Zahlenangaben noch mit 100 zu multiplizieren sind. Die aktuelle Motordrehzahl wird zum Einen durch eine farbige Markierung der Skala 6 dargestellt und zum Anderen durch einen Zeiger 8, welcher radial von außen auf die Skala 6 und den Teilkreis zeigt.

Das rechte Rundinstrument 3 umfasst gleichermaßen einen Teilkreis von dem sich radial nach außen Skalenstriche 6 und Zahlenwerte 11 erstrecken. Ferner wird der aktuelle Geschwindigkeitswert auch durch eine farbige Markierung der Skala 7 und einen Zeiger 9 dargestellt, der sich radial von außen in Richtung des Teilkreises bzw. der Skala 7 erstreckt.

Innerhalb des Rundinstruments 2 ist ein Anzeigebereich 4 zur Darstellung von Information gebildet. Gleichermaßen ist innerhalb des Rundinstruments 3 ein Anzeigebereich 5 zur Darstellung von Information gebildet. Diese Anzeigebereiche 4 und 5 werden im Wesentlichen von dem jeweiligen Teilkreis der Rundinstrumente 2 und 3 begrenzt.

Das Display 1 ist mit einer (nicht gezeigten) Steuereinheit zum Steuern der Anzeige auf dem Display 1 verbunden. Die Steuerung eines Displays 1 mit einer Steuereinheit ist an sich bekannt.

Die beiden Rundinstrumente 2 und 3 werden so auf dem Display 1 dargestellt, dass sie aneinander angrenzen, so dass zwischen den beiden Rundinstrumenten 2 und 3 kein Anzeigebereich zur Darstellung von Information verbleibt. Gleichermaßen grenzen die Rundinstrumente auch an die seitlichen, die oberen und unteren Begrenzungen des Displays 1 an, so dass auch seitlich, oberhalb und unterhalb der Rundinstrumente 2 und 3 kein Anzeigebereich zur Darstellung von Zusatzinformation verbleibt.

Der jeweilige Außendurchmesser der beiden Rundinstrumente 2 und 3 ist identisch. Er ergibt sich aus der Länge einer Strecke, die sich horizontal, d. h. in Richtung der Breite des Displays 1 von dem am weitesten links gelegenen Punkt, der für die Darstellung des Rundinstruments 2 bzw. 3 genutzt wird, bis zu dem am weitesten rechts gelegenen Punkt, der zur Darstellung des Rundinstruments 2 bzw. 3 genutzt wird, erstreckt. Das Verhältnis der Summe der beiden Außendurchmesser der beiden Rundinstrumente 2 und 3 zu der Breite des Displays 1 ist bei dem vorliegenden Ausführungsbeispiel etwa 0,93. Es kann sich jedoch auch in einem Bereich von 0,8 bis 0,98 bzw. in einem Bereich von 0,9 bis 0,95 bewegen. Ferner besitzen die Anzeigebereiche 4 und 5 innerhalb der beiden Rundinstrumente 2 und 3 einen Durchmesser. Dies ist im gezeigten Ausführungsbeispiel der Durchmesser des Teilkreises der Rundinstrumente 2 bzw. 3. Das Verhältnis der Summe dieser Durchmesser der Anzeigebereiche 4 und 5 zu der Breite des Displays 1 ist im vorliegenden Ausführungsbeispiel etwa 0,63. Das Verhältnis kann jedoch auch in einem Bereich von 0,5 bis 0,8 bzw. von 0,6 bis 0,7 liegen.

Die vorstehend beschriebenen geometrischen Verhältnisse bei der Anzeige der Rundinstrumente 2 und 3 auf dem Display 1 führen zu einem optimalen Verhältnis eines möglichst kleinen kostengünstigen Displays einerseits und einer gut erkennbaren Darstellung der Rundinstrumente 2 und 3 und der Darstellung in den Anzeigebereichen 4 und 5 innerhalb der Rundinstrumente andererseits.

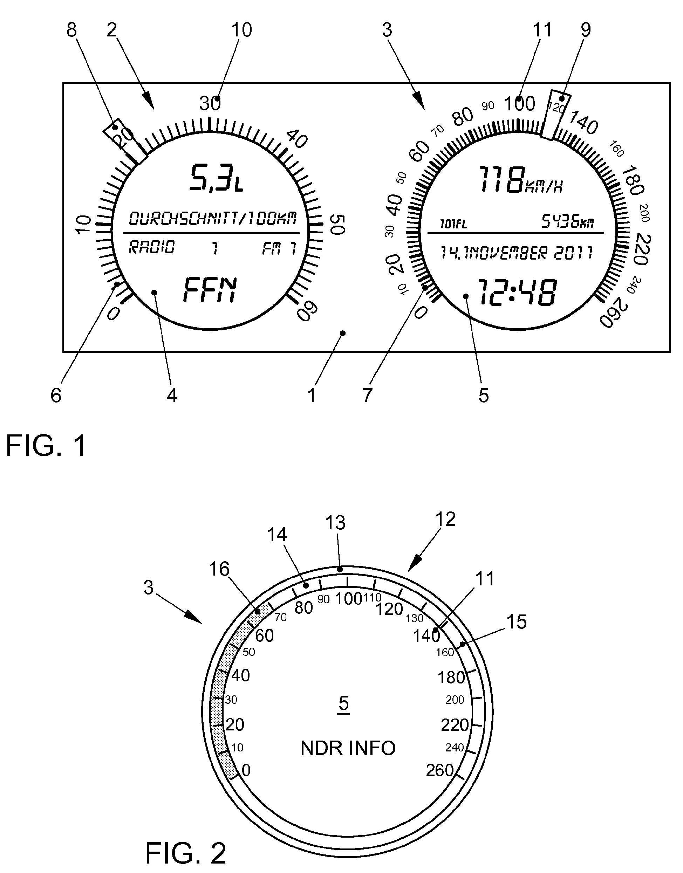

In Figur 2 ist ein Kombinationsanzeigeinstrument gezeigt, wobei nur die Ausbildung des Rundinstruments 3 für die Geschwindigkeitsanzeige gezeigt ist. Die Ausbildung des Rundinstruments 2 für die Motordrehzahl erfolgt jedoch auf die gleiche Weise, wobei die Rundinstrumente 2 und 3, wie bei dem ersten Ausführungsbeispiel und wie in Figur 1 gezeigt, relativ zueinander und auf dem Display 1 angeordnet sind.

Das Rundinstrument 3 gemäß dem zweiten Ausführungsbeispiel umfasst einen körperlichen Ringabschnitt 12. Das Rundinstrument 3 wird von diesem körperlichen Ringabschnitt 12 und von der Anzeige auf dem Display in der Umgebung dieses Ringabschnitts 12 gebildet. Der Ringabschnitt 12 ist somit der Anzeige des Rundinstruments 3 auf dem Display 1 zugeordnet. Er ist z. B. auf das Display 1 aufgesetzt, von diesem beabstandet oder in eine Deckscheibe für das Kombinationsanzeigeinstrument integriert.

Der Ringabschnitt 12 ist z. B. aus einem Kunststoff gefertigt. Er besitzt einen radial äußeren Bereich 13, der nicht transparent ist. Dieser Bereich kann z. B. verchromt sein. Ferner besitzt der Ringabschnitt 12 einen radial inneren Bereich 14, der transparent ist, so dass Anzeigen des Displays 1, die in Betrachtungsrichtung hinter dem Ringabschnitt 12 angezeigt werden, durch diesen transparenten Teil des Ringabschnitts 12 für den Betrachter sichtbar sind. Auf dem transparenten inneren Ringabschnitt 14 ist eine Skaleneinteilung 15 angebracht.

Bei der Anzeige des Rundinstruments 3 auf dem Display 1 nach dem zweiten Ausführungsbeispiel kann auf eine Skala verzichtet werden, da diese von dem Ringabschnitt 12 bereits verwirklicht wird. Auf dem Display 1 werden jedoch die Zahlenwerte 11 entweder radial innerhalb des Ringabschnitts 12 oder radial außerhalb des Ringabschnitts 12 angezeigt. Der aktuelle Geschwindigkeitswert wird durch einen Ringbalken 16 vom Display 1 angezeigt, der vom Anfangswert null bis zu der aktuellen Geschwindigkeit reicht. Der Ringbalken 16 wird hinter dem transparenten Abschnitt 14 des Ringabschnitts 12 angezeigt. Auch bei dem Rundinstrument des zweiten Ausführungsbeispiels ist innerhalb des Rundinstruments 3 der Anzeigebereich 5 für die Darstellung von Zusatzinformationen gebildet.

Im Folgenden werden Ausgestaltungen und Weiterbildungen der beiden vorstehend beschriebenen Ausführungsbeispiele erläutert, die zu neuen Ausführungsbeispielen führen:
Die von den Rundinstrumenten 2 und 3 angezeigten Werte, d. h. im vorliegenden Ausführungsbeispiel die Motordrehzahl und die Geschwindigkeit, können zusätzlich digital z. B. in den Anzeigebereichen 4 und/oder 5 angezeigt werden.

Der körperliche Ringabschnitt 12 des Rundinstruments 3 des zweiten Ausführungsbeispiels ist offen ausgestaltet. Er kann von einer Anzeige des Displays 1 fortgeführt und geschlossen werden. Diese Ergänzung durch die Anzeige des Displays 1 kann auch ausbleichend oder als Ringschluss oder bis zur Maske dargestellt werden.

Auf dem Display 1 kann zusätzlich gegebenenfalls auch außerhalb der Anzeigebereiche 4 und 5 eine Anzeige für den Fahrtrichtungsanzeiger dargestellt werden.

Eines der Rundinstrumente 2 bzw. 3 kann temporär, situativ und/oder menüabhängig in einem anderen Betriebszustand des Displays 1 nicht dargestellt werden. Statt dessen wird ein größerer Anzeigebereich für die Darstellung anderer Funktionen gebildet. Des Weiteren können die beiden Rundinstrumente 2 und 3 temporär, situativ und/oder menüabhängig nicht dargestellt werden und statt dessen das vollständige Display 1 zur Darstellung einer anderen Funktion genutzt werden.

Umfasst das Kraftfahrzeug, in welchem das erfindungsgemäße Kombinationsanzeigeinstrument verwendet wird, ein alternatives Antriebskonzept, bei dem die Anzeige der Motordrehzahl nicht sinnvoll ist, kann das Rundinstrument 2 weggelassen werden und statt dessen ein anderes Darstellungskonzept für das alternative Antriebskonzept des Kraftfahrzeugs dargestellt werden. Diese Anpassung ist ohne Hardwareänderungen möglich, so dass das Kombinationsanzeigeinstrument kostengünstig für verschiedene Fahrzeugmodelle mit unterschiedlichen Antriebskonzepten angepasst werden kann.

Seitlich neben dem Display 1 können noch weitere mechanische Rundinstrumente z. B. für eine Temperaturanzeige, eine Reichweitenanzeige, eine Tankanzeige, eine Leistungsanzeige oder andere Parameter positioniert werden.

### BEZUGSZEICHENLISTE

- 1: Display
- 2: Rundinstrument
- 3: Rundinstrument
- 4: Anzeigebereich
- 5: Anzeigebereich
- 6: Skala
- 7: Skala
- 8: Zeiger
- 9: Zeiger
- 10: Zahlenwerte
- 11: Zahlenwerte
- 12: körperlicher Ringabschnitt
- 13: verchromter Abschnitt des Ringabschnitts
- 14: transparenter Abschnitt des Ringabschnitts
- 15: Skala
- 16: Ringbalken

## Patentansprüche

1. Verfahren zum Steuern eines Displays (1) eines Kombinationsanzeigeinstruments für ein Kraftfahrzeug, bei dem in zumindest einem Betriebszustand das Display (1) so angesteuert wird, dass zwei analoge Rundinstrumente (2, 3) nebeneinander so auf dem Display (1) angezeigt werden, dass die Rundinstrumente (2, 3) jeweils eine Skala (6, 7) umfassen, die auf einem Teilkreis angeordnet ist, dass der aktuelle von dem Rundinstrument (2, 3) wiedergegebene Skalenwert mittels eines auf dem Display (1) angezeigten Zeigers (8, 9) dargestellt wird, der radial von außen auf den Teilkreis zeigt, dass die Rundinstrumente (2, 3) so angeordnet sind, dass sie aneinander angrenzen, so dass zwischen den beiden Rundinstrumenten (2, 3) kein Anzeigebereich zur Anzeige von Information verbleibt und dass seitlich neben den Rundinstrumenten (2, 3) keine Anzeigebereiche gebildet sind, und dass innerhalb der Rundinstrumente (2, 3) jeweils Anzeigebereiche (4, 5) zur Darstellung von Information gebildet sind, so dass jegliche Zusatzinformation, welche den Anzeigeinhalt der Rundinstrumente (2, 3) ergänzt, innerhalb der Rundinstrumente (2, 3) dargestellt wird.

2. Verfahren nach Anspruch 1,
**dadurch gekennzeichnet,**
**dass** der aktuelle von dem Rundinstrument (2, 3) wiedergegebene Skalenwert mittels einer farbigen Markierung der Skala (6, 7) angezeigt wird.

3. Verfahren nach Anspruch 1 oder 2,
**dadurch gekennzeichnet,**
**dass** das Verhältnis der Summe der Außendurchmesser der beiden Rundinstrumente (2, 3) zu der Breite des Displays (1) in einem Bereich von 0,8 bis 0,98 liegt.

4. Verfahren nach Anspruch 1 oder 2,
**dadurch gekennzeichnet,**
**dass** das Verhältnis der Summe der Außendurchmesser der beiden Rundinstrumente (2, 3) zu der Breite des Displays (1) in einem Bereich von 0,9 bis 0,95 liegt.

5. Verfahren nach Anspruch 1 oder 2,
**dadurch gekennzeichnet,**
**dass** das Verhältnis der Summe der Durchmesser der Anzeigebereiche (4, 5) innerhalb der beiden Rundinstrumente (2, 3) zu der Breite des Displays (1) in einem Bereich von 0,5 bis 0,8 liegt.

6. Verfahren nach Anspruch 1 oder 2,
**dadurch gekennzeichnet,**
**dass** das Verhältnis der Summe der Durchmesser der Anzeigebereiche (4, 5) innerhalb der beiden Rundinstrumente (2, 3) zu der Breite des Displays (1) in einem Bereich von 0,6 bis 0,7 liegt.

## Claims

1. Method for controlling a display (1) of a combination display instrument for a motor vehicle, in which, in at least one operating state, the display (1) is driven in such a way that two analogue round instruments (2, 3) are displayed beside one another on the display (1) in such a way that the round instruments (2, 3) respectively comprise a scale (6, 7) which is arranged on a part of a circle, that the current scale value reproduced by the round instrument (2, 3) is depicted by means of a pointer (8, 9) which is displayed on the display (1) and which points at the part of the circle radially from outside, that the round instruments (2, 3) are arranged such that they adjoin one another, so that no display area for the display of information remains between the two round instruments (2, 3), and that no display areas are formed laterally beside the round instruments (2, 3), and that, within the round instruments (2, 3), in each case display areas (4, 5) for the depiction of information are formed, so that any additional information which supplements the display content of the round instruments (2, 3) is depicted within the round instruments (2, 3).

2. Method according to Claim 1,
**characterized in that**
the current scale value reproduced by the round instrument (2, 3) is displayed by means of a coloured marking of the scale (6, 7).

3. Method according to Claim 1 or 2,
**characterized in that**
the ratio of the sum of the external diameters of the two round instruments (2, 3) to the width of the display (1) lies in a range from 0.8 to 0.98.

4. Method according to Claim 1 or 2,
**characterized in that**
the ratio of the sum of the external diameters of the two round instruments (2, 3) to the width of the display (1) lies in a range from 0.9 to 0.95.

5. Method according to Claim 1 or 2,
**characterized in that**
the ratio of the sum of the diameters of the display areas (4, 5) within the two round instruments (2, 3) to the width of the display (1) lies in a range from 0.5 to 0.8.

6. Method according to Claim 1 or 2,
**characterized in that**
the ratio of the sum of the diameters of the display areas (4, 5) within the two round instruments (2, 3) to the width of the display (1) lies in a range from 0.6 to 0.7.

## Revendications

1. Procédé de commande d'un dispositif d'affichage (1) d'un instrument d'affichage combiné pour un véhicule automobile, dans lequel, dans au moins un état de fonctionnement, le dispositif d'affichage (1) est commandé de telle manière que deux instruments circulaires analogiques (2, 3) soient affichés l'un à côté de l'autre sur le dispositif d'affichage (1) de manière à ce que les instruments circulaires (2, 3) comprennent chacun une échelle de graduation (6, 7) qui est disposée sur un arc de cercle, que la valeur de graduation actuelle restituée par l'instrument circulaire (2, 3) soit représentée au moyen d'une aiguille (8, 9) affichée sur le dispositif d'affichage (1), laquelle aiguille pointe radialement vers l'extérieur sur l'arc de cercle, que les instruments circulaires (2, 3) soient disposés de manière à ce qu'ils soient adjacents l'un à l'autre afin qu'aucune zone d'affichage ne subsiste entre les deux instruments circulaires (2, 3) pour l'affichage d'informations et qu'il ne subsiste aucune région d'affichage située latéralement sur les côtés des instruments circulaires (2, 3) et que des régions d'affichage (4, 5) soient respectivement formées à l'intérieur des instruments circulaires (2, 3) pour représenter des informations de manière à ce que toute autre information supplémentaire complétant le contenu d'affichage des instruments circulaires (2, 3) soit représentée à l'intérieur des instruments circulaires (2, 3).

2. Procédé selon la revendication 1,
**caractérisé en ce que** la valeur de graduation actuelle restituée par l'instrument circulaire (2, 3) est affichée au moyen d'un symbole coloré de l'échelle de graduation (6, 7).

3. Procédé selon la revendication 1 ou 2,
**caractérisé en ce que** le rapport de la somme des diamètres extérieurs des deux instruments circulaires (2, 3) à la largeur du dispositif d'affichage (1) se situe dans un intervalle de 0,8 à 0,98.

4. Procédé selon la revendication 1 ou 2,
**caractérisé en ce que** le rapport de la somme des diamètres extérieurs des deux instruments circulaires (2, 3) à la largeur du dispositif d'affichage (1) se situe dans un intervalle de 0,9 à 0,95.

5. Procédé selon la revendication 1 ou 2,
**caractérisé en ce que** le rapport de la somme des diamètres des zones d'affichage (4, 5) à l'intérieur des deux instruments circulaires (2, 3) à la largeur du dispositif d'affichage (1) se situe dans un intervalle de 0,5 à 0,8.

6. Procédé selon la revendication 1 ou 2,
**caractérisé en ce que** le rapport de la somme des diamètres des zones d'affichage (4, 5) à l'intérieur des deux instruments circulaires (2, 3) à la largeur du dispositif d'affichage (1) se situe dans un intervalle de 0,6 à 0,7.
